# EUROPEAN PATENT APPLICATION

(11) **EP 1 269 896 A1**
(43) Date of publication of application: **02.01.2003**
(21) Application number: 01915657.9
(22) Date of filing: 21.03.2001
(51) Int. Cl.: A47G 21/18

(54) **STRAW TUBE, AND DEVICE AND METHOD FOR MANUFACTURING THE STRAW TUBE**

(30) Priority: 23.03.2000 JP 2000082971; 11.07.2000 JP 2000210372
(71) Applicant: Showa Denko Plastic Products Co. Ltd., Tokyo 103-0012 (JP)
(72) Inventor: HOSHI, Katsumasa, Saitama 349-0133 (JP); ISHIWATARI,K. Showa Denko Plastic Products Co.,Ltd, Kawaski-ku, Kawasaki-shi Kanagawa (JP); SUYAMA,Minoru Showa Denko Plastic Products Co,Ltd., 103-0012 Tokio (JP)
(74) Representative: Strehl Schübel-Hopf & Partner
(86) International application number: JP0102213
(87) International publication number: WO01070082

(57) **Abstract**

The present invention is a straw tube in which a groove (4) is formed on the outer circumferential wall of a tube along the longitudinal direction thereof, and a ridge (5) interposed between these grooves and projecting outward from the datum level of the outer circumferential wall is formed. Such a straw tube can prevent a reduction in the pressure inside a drinking container during sucking of a drink in the drinking container. The present invention is an apparatus for producing a straw tube comprising a rotating drum having formed thereon tube loading grooves onto which tube bodies are loaded, a female rod which reciprocates within the tube loading grooves by means of a cam mechanism and has grooves formed on a surface, and a male roller having ridges corresponding to the grooves of the female rod, wherein the male roller is disposed such that the grooves of the female rod are engaged with the ridges of the male roller while sandwiching the tube, and the female rod and the male roller are synchronized. The present invention is also a method for producing a straw tube using the apparatus. According to such an apparatus and method for producing a straw tube, a straw tube capable of preventing a reduction in the pressure inside a drinking container during sucking of a drink in the drinking container can be easily and efficiently produced.

## Description

### Technical Field

The present invention relates to a straw tube for sucking a drink in a drinking container, and more specifically, the present invention relates to a straw tube capable of preventing the pressure inside the drinking container from decreasing while sucking.

This application is based on patent applications filed in Japan (Japanese Patent Application No. 2000-82971 and Japanese Patent Application No. 2000-210372), the contents of which are incorporated herein by reference.

### Background Art

Beverage products enabling the drinking of a drink in a drinking container by inserting a straw tube into a sealed drinking container having a hollow part in the inside thereof and sucking on the straw tube are available on the market.

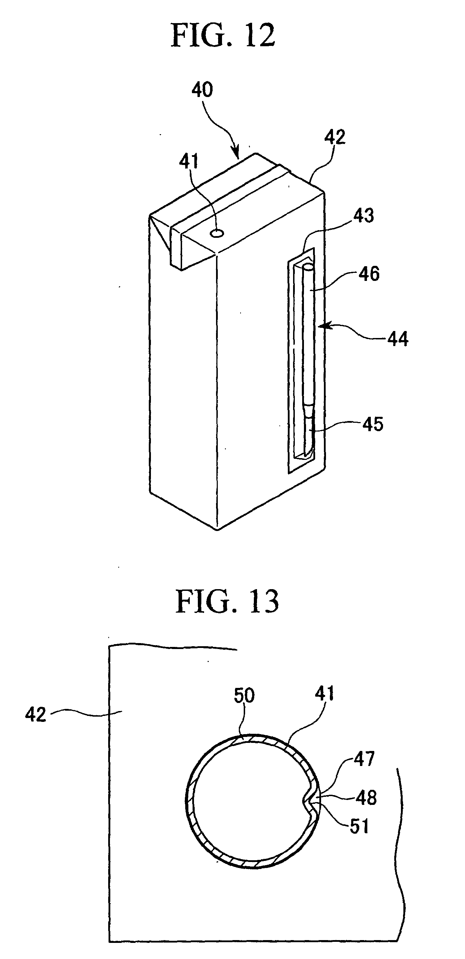

Fig. 12 is a view showing one example of a beverage product. This beverage product 40 is constituted by a rectangular parallelepiped container body 42 having a sucking hole 41, which is sealed with a plastic film or the like, formed on the upper surface, and a two-stage straw tube 44 stored in a bag 43 and attached to a side surface of the container body 42. The "two-stage straw tube" as used herein means a straw tube in which an inner tube and an outer tube of different diameters are combined to allow free extension or retraction.

When drinking a drink in the container body 42, the two-stage straw tube 44 is extended by sliding an inner tube 45 and an outer tube 46, the plastic film sealing the sucking hole 41 is ruptured by the tip of the two-stage straw tube 44, the two-stage straw tube 44 is inserted into the container body 42, and the drink in the container body 42 is sucked through the base end portion of the two-stage straw tube 44.

However, usually when the two-stage straw tube 44 is inserted into the container body 42 and the drink in the container body 42 is sucked, the pressure inside the container body 42 is reduced, and the container body 42 is deformed making drinking difficult, or when the sucking is interrupted or finished, air abruptly enters into the container body 42 through the two-stage straw tube 44 generating disagreeable noises.

Therefore, a straw tube having a groove formed on the outer circumferential wall of the outer tube and extending in the longitudinal direction has been proposed in Japanese Utility Model Application, First Publication No. Sho 59-70574, Japanese Utility Model Application, Second Publication No. Hei 3-49570, Japanese Patent No. 2582005, Japanese Unexamined Patent Application, First Publication No. Hei 7-163450, Japanese Registered Design No. 957695, and Japanese Unexamined Patent Applications, First Publication Nos. Hei 7-222664, Hei 7-222665, and Hei 7-322948, for example.

As shown in Fig. 13, a straw tube having such a groove formed thereon can form a void 48 between a peripheral edge 47 of the sucking hole 41 on the container body 42 and a groove 51 on a straw tube 50. Therefore, since air can be introduced during sucking, a reduction in the pressure inside the container body 42 can be prevented, and the generation of deformations of the container body 42 or disagreeable noises can be inhibited.

However, since the groove 51 on the straw tube 50 is shallow, the void 48 formed between the peripheral edge 47 of the sucking hole 41 and the groove 51 on the straw 50 is small. Furthermore, depending on the case, the peripheral edge 47 of the sucking hole 41 conforms to the groove 51 on the straw tube 50, and the peripheral edge 47 of the sucking hole 41 blocks the void 48 during sucking. As a result, a state of reduced pressure is often generated inside the container body 42.

Accordingly, an object of the present invention is to provide a straw tube which is easy to drink with and does not produce disagreeable sounds during drinking by preventing a reduction in the pressure inside a sucking type drinking container in which the straw tube is inserted into a hole provided in the drinking container, and to provide an apparatus and a method for producing the straw tube.

### Disclosure of Invention

The straw tube of the present invention is characterized by having a groove which is formed on the outer circumferential wall of the tube along the longitudinal direction thereof and a ridge which is formed adjacent to the groove and projects outward from the datum level of the outer circumferential wall. Such a straw tube can prevent a reduction in the pressure inside the drinking container during sucking of the drink in the drinking container. By this means, the drink in the drinking container can be easily sucked and the generation of disagreeable noises can be inhibited.

Also, the straw tube of the present invention is characterized by having a plurality of grooves formed on the outer circumferential wall of the tube along the longitudinal direction thereof and a ridge interposed between these grooves and projecting outward from the datum level of the outer circumferential wall. Such a straw tube can prevent a reduction in the pressure inside the drinking container during sucking of the drink in the drinking container. By this means, the drink in the drinking container can be easily sucked and the generation of disagreeable noises can be inhibited.

It is preferable that the straw tube of the present invention be a multistage straw tube in which two or more tubes of different diameters are combined to allow free extension or retraction. Such a multistage straw tube can prevent a reduction in the pressure inside the drinking container during sucking of the drink in the drinking container, and the straw tube can be attached to the container body in a retracted state.

It is preferable that the groove and ridge be formed on the outer circumferential wall of the outermost tube located at the outermost side of the two or more tubes of the multistage straw tube. With such a multistage straw tube, the drink within the drinking container can be easily sucked, and the above-described effects can be achieved.

Preferably, there are two grooves, and one ridge is formed therebetween adjacent to these grooves. In such a straw tube, the formation of the grooves and ridge is easy.

The lengths of the groove and the ridge are preferably 1/3 to 3/4 the length of the tube on which the groove and the ridge are formed. Such a straw tube can prevent a reduction in the pressure inside the drinking container without impairing the performance as a straw tube.

The height of the ridge is preferably 0.05 to 1.0 mm from the datum level of the outer circumferential wall of the tube on which the ridge is formed. With such a straw tube, it is possible to combine both a sufficient effect of preventing a reduction of the pressure and facilitating the formation of the ridge.

The depth of the groove is preferably 0.1 to 0.8 mm from the datum level of the outer circumferential wall of the tube on which the groove is formed. With such a straw tube, it is possible to combine both a sufficient effect of preventing a reduction of the pressure and facilitating the formation of the groove.

The material of the straw tube of the present invention is preferably a propylene-α-olefin random copolymer, a propylene-α-olefin block copolymer, or a homopolypropylene, and has a melt flow index of 3 to 16 g/10 min. In such a straw tube, the ridge can be easily formed by being projected from the datum level of the outer circumferential wall without crushing the grooves during the processing of the straw tube.

The propylene-α-olefin random copolymer or the propylene-α-olefin block copolymer is preferably a propylene-ethylene random copolymer or a propylene-ethylene block copolymer. In such a straw tube, the ridge can be more easily formed by being projected from the datum level of the outer circumferential wall during the processing of the straw tube.

The ethylene content of the propylene-ethylene random copolymer or the propylene-ethylene block copolymer is preferably from 2 to 20% by mass. In such a straw tube, the ridge can be formed by being projected from the datum level of the outer circumferential wall without causing whitening in the ridge and groove parts during processing of the straw tube.

The apparatus for producing a straw tube of the present invention is an apparatus used for producing a straw tube in which a plurality of grooves are formed on the outer circumferential wall of the tube along the longitudinal direction thereof, and a ridge interposed between these grooves and projecting outward from the datum level of the outer circumferential wall is formed. The apparatus is provided with: a rotating drum on which a plurality of tube loading grooves, onto which tubes are loaded, are formed in the axial direction of the outer circumferential wall; a female rod capable of being inserted into or drawn out from a tube within the tube loading groove by the reciprocation of a cam mechanism and having a plurality of grooves formed at the position corresponding to the surface of the tube which is exposed from the tube loading groove; and a male roller in which a male mold having ridges corresponding to the grooves of said female rod is provided at a plurality of positions on the outer circumferential wall. The male roller is disposed such that the grooves of the female rod and the ridges of the male roller engage while sandwiching a tube, and the female rod and the male roller are synchronized. According to such an apparatus for producing a straw tube, a straw tube capable of preventing a reduction in the pressure inside the drinking container during sucking of the drink in the drinking container can be easily and efficiently produced.

The method for producing a straw tube of the present invention is a method for producing a straw tube in which a plurality of grooves are formed on the outer circumferential wall of the tube along the longitudinal direction thereof, and a ridge interposed between these grooves and projecting outward from the datum level of the outer circumferential wall is formed. The method is characterized in comprising a step of loading a tube onto a tube loading groove formed on the outer circumferential wall of a rotating drum along the axial direction thereof, a step of inserting into the tube a female rod having a plurality of grooves formed at the position corresponding to the surface of the tube which is exposed from the tube loading grooves, and a step of engaging the grooves of the female rod within the tube with the ridges of a male mold provided on a male roller while sandwiching the tube. According to such a method for producing a straw tube, a straw tube capable of preventing a reduction in the pressure inside the drinking container during sucking of the drink in the drinking container can be easily and efficiently produced.

Further, the female rod preferably has two grooves, and the male mold provided on the male roller preferably has two ridges. By this means, a straw tube can be more easily produced.

### Brief Description of Drawings

Fig. 1 is a view showing one example of the straw tube of the present invention; (a) is a top view, and (b) is a side view.
Fig. 2 is a cross section showing one example of the straw tube of the present invention.
Fig. 3 is a top view showing the state where the straw tube of the present invention is inserted into a drinking container.
Fig. 4 is a schematic view showing one example of the apparatus for producing a straw tube of the present invention.
Fig. 5 is a side view showing the rotating drum viewed from the V direction of Fig. 4.
Fig. 6 is a view showing the female rod of the apparatus for producing a straw tube of the present invention.
Fig. 7 is a perspective view showing the male roller of the apparatus for producing a straw tube of the present invention.
Fig. 8 is a perspective view showing the state where the female rod is inserted into the outer tube.
Fig. 9 is a cross section showing the state where the grooves of the female rod are engaged with the ridges of the male mold provided on the male roller while sandwiching a heated tube.
Fig. 10 is a view showing another example of the straw tube of the present invention; (a) is a top view, and (b) is a side view.
Fig. 11 is a cross section showing another example of the straw tube of the present invention; (a) is a cross section showing the state where the inner tube is housed in the outer tube, and (b) is a cross section showing the state where the tube is extended.
Fig. 12 is a perspective view showing one example of a drinking container.
Fig. 13 is a perspective view showing the state where a conventional straw tube is inserted into a drinking container.

### Best Mode for Carrying Out the Invention

The present invention is described in detail below.

### (Embodiment 1)

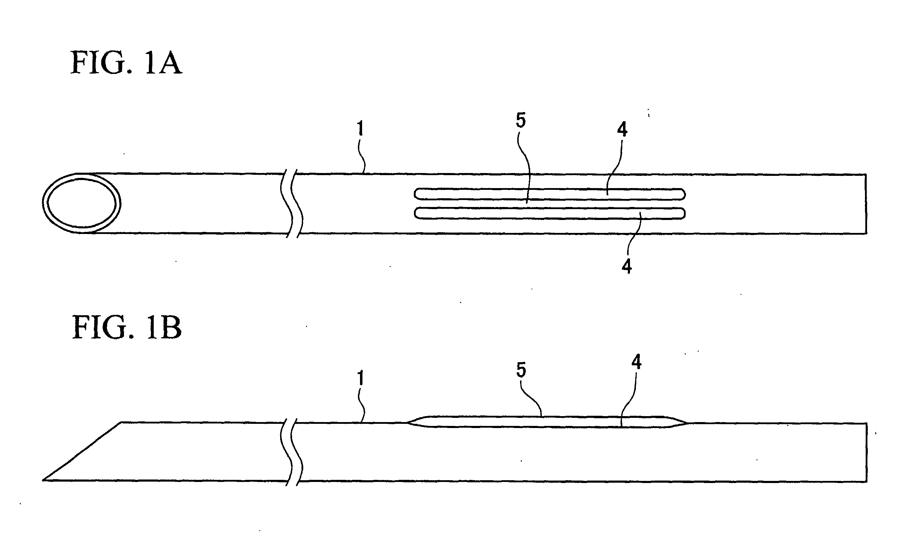

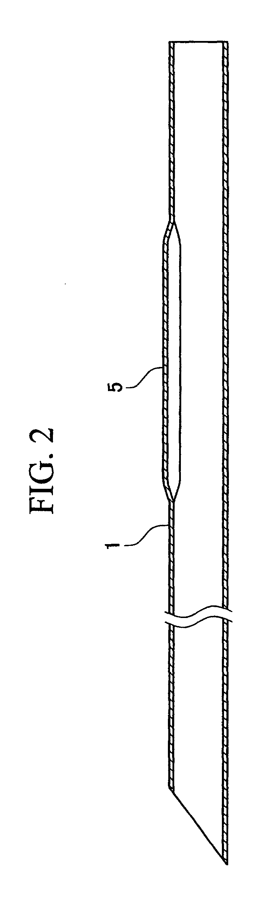

Figs. 1 and 2 are views showing one embodiment of the straw tube of the present invention.

In this straw tube, two grooves 4, 4 are formed on the outer circumferential wall of a tube body 1 along the longitudinal direction thereof, and a ridge 5 projecting outward from the datum level of the outer circumferential wall is interposed between these grooves 4,4.

The lengths of the groove 4 and the ridge 5 are not particularly limited, and it is sufficient if each is adjusted such that when the straw tube is inserted into a drinking container, the ridge comes into contact with a sucking hole of the drinking container. However, in view of practical use and a production standpoint, each length is preferably from 1/3 to 3/4 the length of the straw tube. If the lengths of the groove 4 and the ridge 5 are less than 1/3 the length of the straw tube, there is a risk that the ridge 5 may not come into contact with the sucking hole of the drinking container depending on the length when the straw tube is inserted into the drinking container, and if the lengths of the groove 4 and the ridge 5 exceed 3/4 the length of the straw tube, for the case of producing a multistage straw, there is a possibility that the engagement at the joint part between the straw inner tube and the straw outer tube will be insufficient.

The height of the ridge 5 is not particularly limited, and it is sufficient if the ridge 5 is high enough such that, when the straw tube is inserted into the drinking container, the ridge 5 can expand the sucking hole of the drinking container. However, in view of practical use and a production standpoint, the height of the ridge 5 is preferably from 0.05 to 1.0 mm from the datum level of the outer circumferential wall of the tube body 1. If the height of the ridge 5 is less than 0.05 mm from the datum level of the outer circumferential wall of the tube body 1, there is a risk that the effect of expanding the sucking hole of the drinking container will be insufficient, and if the height of the ridge 5 exceeds 1.0 mm from the datum level of the outer circumferential wall of the tube body 1, the formation of the ridge 5 becomes difficult.

The "datum level of the outer circumferential wall" as used herein means the surface of the outer circumferential wall of the tube body 1 at the time when the groove 4 and the ridge 5 have not been formed.

The depth of the groove 4 is not particularly limited, and it is sufficient if the groove 4 is deep enough such that when the straw tube is inserted into the drinking container, the groove 4 does not conform to the sucking hole of the drinking container. However, in view of practical use and a production standpoint, the depth of the groove 4 is preferably from 0.1 to 0.8 mm from the datum level of the outer circumferential wall of the tube body 1. If the depth of the groove 4 is less than 0.1 mm from the datum level of the outer circumferential wall of the tube body 1, the groove 4 conforms to the sucking hole of the drinking container, and there is a risk that the void formed between the sucking hole and the groove 4 may become blocked; if the depth of the groove 4 exceeds 0.8 mm from the datum level of the outer circumferential wall of the tube body 1, the formation of the groove 4 becomes difficult.

Examples of the material of the straw tube include polyolefin-based resins such as polyethylene and polypropylene, polystyrene, ABS resins, paper, and the like. Among these, polypropylene is preferred. Specifically, a propylene homopolymer and a block or random copolymer of propylene with another α-olefin are suitably used.

Specifically, among these polypropylenes, a propylene-α-olefin random copolymer, a propylene-α-olefin block copolymer, or a homopolypropylene, any of which having a melt flow index of 3 to 16 g/10 min., are suitably used because the ridge 5 can be easily formed by being projected from the datum level of the outer circumferential wall at the time of processing the tube body 1.

If the melt flow index of the propylene-α-olefin random copolymer, propylene-α-olefin block copolymer, or homopolypropylene is less than 3 g/10 min., there is a risk that it will be difficult to form the ridge 5 by projecting it at the time of processing the tube body 1, or the tube body 1 may be damaged. If the melt flow index exceeds 16 g/10 min., there is a risk that the groove 4 will be easily crushed at the time of processing the tube body 1 or the roundness of the tube body 1 may be impaired.

The "melt flow index" as used herein is a value measured in accordance with JIS K7210.

Among these propylene-α-olefin random copolymers and propylene-α-olefin block copolymers, a propylene-ethylene random copolymer and a propylene-ethylene block copolymer are suitably used because the ridge 5 can be easily formed by being projected from the datum level of the outer circumferential wall at the time of processing the tube body 1. The ethylene content of these propylene-ethylene random copolymers or propylene-ethylene block copolymers is preferably 2 to 20% by mass. If the ethylene content is less than 2% by mass, there is a risk that it will be difficult to form the ridge 5 by projecting it at the time of processing the tube body 1, or the tube body 1 may be damaged. If the ethylene content exceeds 20% by mass, there is a risk that the groove 4 and the ridge 5 portions may be whitened.

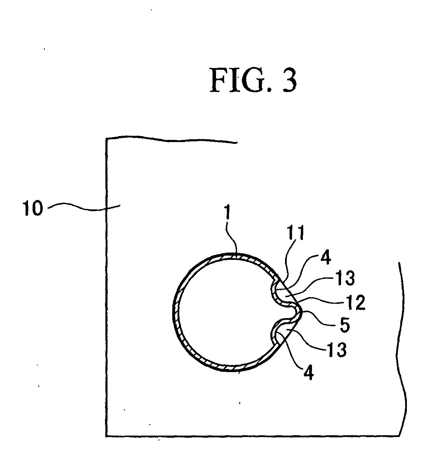

As shown in Fig. 3, when such a straw tube is inserted into a sucking hole 11 of a container body 10 of a drinking container, the ridge 5 can expand a peripheral edge 12 of the sucking hole 11 to form voids 13, 13 between the grooves 4,4 and the peripheral edge 12 of the sucking hole 11. The state in which the ridge 5 expands the peripheral edge 12 of the sucking hole 11 is always maintained, and therefore, the peripheral edge 12 of the sucking hole 11 does not conform to the grooves 4,4 to block the voids 13, 13. As a result, a reduction in the pressure inside the container body 10 can be prevented, and the generation of deformations of the container body 10 or disagreeable noises can be inhibited.

Such an operation effect can first be exhibited when two grooves 4,4 and one ridge 5 interposed between these grooves 4, 4 and projecting from the datum level of the outer circumferential wall of the tube body 1 are provided in combination. In other words, if only the two grooves are provided, the sucking hole cannot be expanded, and there is a risk that the voids between the peripheral edge of the sucking hole and the groove may be blocked by the peripheral edge of the sucking hole.

The straw tube shown in the figures has two grooves formed on the outer circumferential wall of the tube body 1 and one ridge formed therebetween adjacent to these grooves. However, the straw tube of the present invention is not limited to this embodiment. For example, it is also acceptable if there is one groove and one ridge adjacent thereto, three grooves and two ridges therebetween and adjacent to these grooves, or four grooves and three ridges therebetween and adjacent to these grooves. However, the effect of preventing a state of reduced pressure inside the container body can be sufficiently exhibited by a straw tube having two grooves and one ridge therebetween and adjacent to these grooves; therefore, taking the ease of formation or the like into consideration, it is preferable that there are two grooves and one ridge.

Next, an apparatus for producing a straw tube and a method for producing a straw tube using the apparatus are described below.

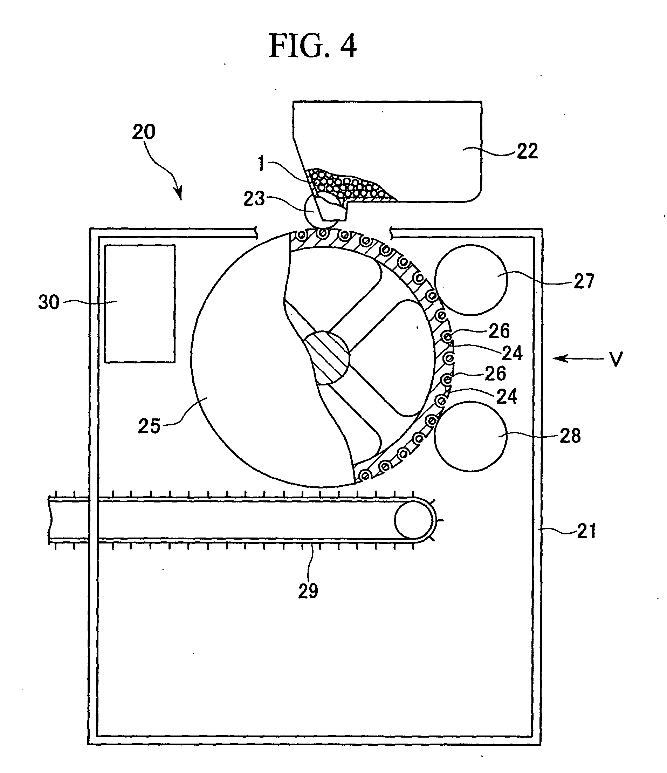

Examples of the apparatus for producing a straw tube include a production apparatus roughly constituted by having a tube forming device (not shown) for forming an annular tube body 1 having a predetermined length and a tube processing device 20, such as shown in Fig. 4, for forming a groove 4 and a ridge 5 on this tube body 1.

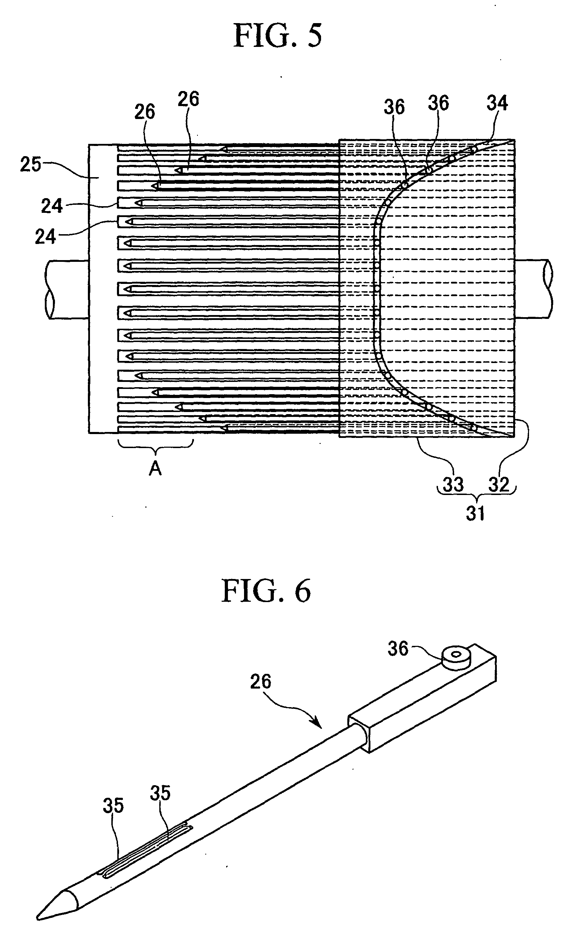

As shown in Figs. 4 and 5, the tube processing device 20 comprises a frame 21, a hopper 22 provided at the upper portion of the frame 21 and housing a plurality of tube bodies 1 fed from the tube forming device (not shown), a rotating drum 25 provided within the frame 21 and having a plurality of tube loading grooves 24, 24,... formed at equal intervals on the outer circumferential wall in the axial direction onto which the tube bodies 1 fed from a feed roller 23 of the hopper 22 are loaded, a heating roller 27 (heating device) for heating the tube body 1 within the tube loading groove 24, a cam floor 31 (cam mechanism) provided by being fixed to the frame 21 so as to cover the base end portion of the rotating drum 25, female rods 26, 26, ... capable of being inserted into or drawn out from the tube body 1 within the tube loading groove 24 by the reciprocation of the cam floor 31, a male roller 28 having a male mold which corresponds to the female rod 26 and which is provided at a plurality of positions on the outer circumferential wall, a belt conveyer 29 for transporting the tube body 1 dropped from the rotating drum 25, and a control box 30.

The cam floor 31 is constituted by one pair of a rod push guide 32 and a rod return guide 33 which are provided so as to cover the outer periphery of the rotating drum 25 at an interval such that there is no contact with the rotating drum 25.

The rod push guide 32 and the rod return guide 33 are fixed to the frame 21 so as to form a fixed spacing 34 therebetween and are provided independently of the rotating drum 25 so as not to rotate together with the rotating drum 25.

On the female rod 26, as shown in Fig. 6, two grooves 35,35 are formed at the position corresponding to the surface of the tube body 1 exposed from the tube loading groove 24. At the base end portion, a roller 36 is axially supported. By moving this roller 36 along the spacing 34 between the rod push guide 32 and the rod return guide 33 of the cam floor 31 accompanying the rotation of the rotating drum 25, the female rod 26 reciprocates within the tube loading groove 24, and in a tube loading area A as shown in Fig. 5, the female rod 26 is inserted into the tube body 1 or drawn out from the tube body 1.

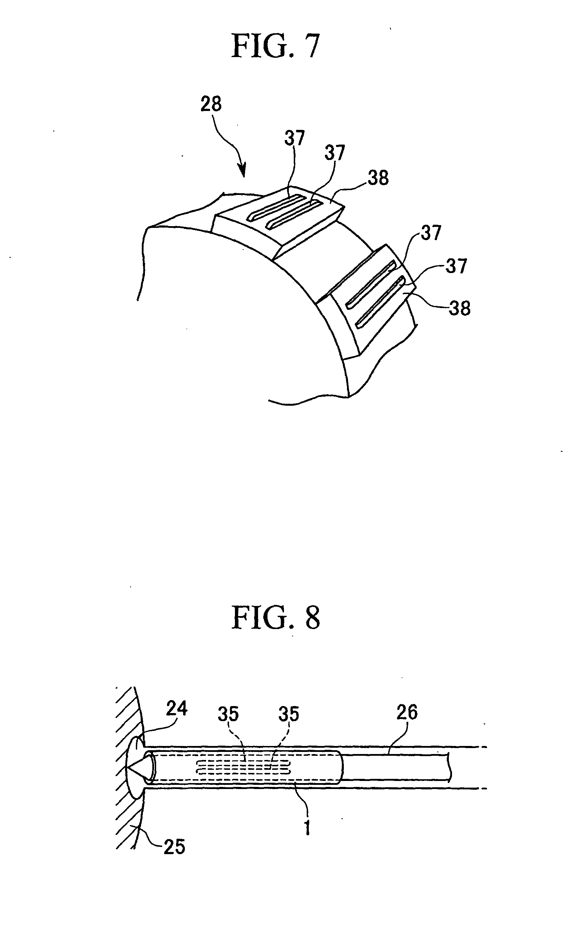

As shown in Fig. 7, in the male roller 28, male molds 38, 38, ... each having ridges 37, 37 corresponding to the grooves 35, 35 of the female rod 26 are provided at equal intervals at a plurality of positions on the outer circumferential wall.

The male roller 28 is disposed such that the grooves 35,35 of the female rod 26 engage with the ridges 37, 37 of the male roller 28, and the female rod 26 and the male roller 28 are synchronized.

In the example shown, there are two grooves on the female rod and two ridges on the male mold provided on the male roller; however, as long as a groove can be formed on the outer circumferential wall of the tube along the longitudinal direction and a ridge can be formed adjacent to this groove and projecting outward from the datum level of the outer circumferential wall, the number of grooves on the female rod and the number of ridges of the male roller are not particularly limited to the example shown in the figures. However, if the number of grooves on the female rod and the number of ridges of the male mold provided on the male roller increase, it becomes difficult to draw the female rod from the tube, and the formation of the grooves and ridges on the tube becomes difficult. Therefore, the number of grooves on the female rod and the number of ridges of the male mold provided on the male roller are each suitably two.

The cam mechanism is not limited to the cam floor of the example shown in the figures, and as long as the female rod can be made to reciprocate, other forms may also be used.

The heating device is also not limited to the heating roller of the example shown in the figures, and as long as the tube body 1 can be heated, other heating devices may be used.

On the outer circumferential wall of the rotating drum 25, a belt for preventing the dropping of the tube body 1 may be provided to extend from the vicinity of the feed roller 23 of the hopper 22 to the upper portion of the belt conveyer 29 so as not to contact the heating roller 27 and the male roller 28.

A straw tube is produced as follows using such an apparatus for producing a straw tube. First, in the tube forming device (not shown), a tube body 1 having a predetermined length is formed in advance.

The tube bodies 1 fed from the tube forming device and housed in the hopper 22 are loaded one by one through the feed roller 23 into the tube loading area A within a tube loading groove 24 formed on the outer circumferential wall of the rotating drum 25 along the axial direction thereof.

As the rotating drum 25 is rotated, the female rod 26 pushed out by the cam floor 31 is inserted into the tube body 1, as shown in Fig. 8, such that the grooves 35,35 are positioned at the positions corresponding to the surface of the tube body 1 exposed from the tube loading groove 24.

Subsequently, the tube body 1 loaded onto the tube loading groove 24 is heated by the heating roller 27 which is in contact with the rotating drum 25.

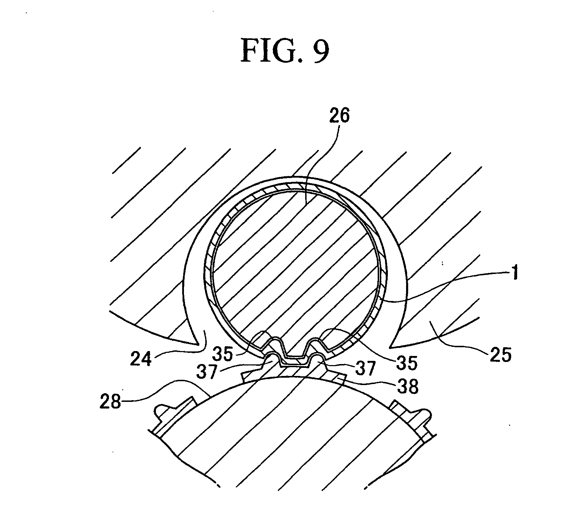

After heating the tube body 1, as shown in Fig. 9, the grooves 35, 35 of the female rod 26 present within the tube body 1 are made to engage with the ridges 37, 37 of the male mold 38 provided on the male roller 28 corresponding to the grooves 35, 35 of the female rod 26 while sandwiching the heated tube body 1, whereby on the outer circumferential wall of the tube body 1, two grooves 4,4 are formed along the longitudinal direction as shown in Fig. 1, and a ridge 5 interposed between these grooves 4,4 and projecting outward from the datum level of the outer circumferential wall is formed.

This technique of forming a ridge 5 interposed between the grooves 4,4 and projecting outward from the datum level of the outer circumferential wall of the tube body 1 is considered to be a novel forming technique in the field of plastic working, and at the present time, the details thereof have not yet been elucidated. However, in any case, it is presumed that when the grooves 4, 4 are formed on the tube body 1 by making the grooves 35, 35 of the female rod 26 engage with the ridges 37,37 of the male roller 28 while sandwiching the tube body 1, the position corresponding to the ridge 5 on the outer circumferential wall of the tube body 1 assumes a pushed-out shape from the datum level of the outer circumferential wall due to pressure during engagement, and the ridge 5 of the tube 1 is formed. Furthermore, for the case where a propylene-α-olefin random copolymer, propylene-α-olefin block copolymer, or homopolypropylene having a melt flow index of 3 to 16 g/10 min. is used as the material of the straw tube, the ridge 5 projecting outward from the datum level of the outer circumferential wall of the tube body 1 can be more easily formed.

When the tube body 1 having grooves 4,4 and a ridge 5 formed on the outer circumferential wall thereof reaches the lower portion of the rotating drum 25, the female rod 26 inserted into the tube body 1 is drawn out from the tube body 1 by the cam floor 31, and thereby, the tube body is lowered onto the belt conveyer 29 beneath the rotating drum 25 and transported outside the tube processing device by the belt conveyer 29. Subsequently, the tip of the tube body 1 is obliquely cut, thereby completing a straw tube.

The heating temperature of the tube body 1 by the heating roller 27 is not particularly limited; however, when the tube body 1 is heated to 70 to 80°C, a whitening phenomenon can be prevented. The straw tube of the present invention can be formed with no problems even without the heating of the tube body 1; however, in view of the appearance of the straw tube, a preferred effect can be achieved by using the heating roller 27.

In such a tube processing device 20 and a method for producing a straw tube using the device, the female rod 26 is inserted into the tube body 1 as the rotating roller 25 rotates, and then the grooves 35, 35 of the female rod 26 engage with the ridges 37, 37 of the male roller 28 to form grooves 4,4 and a ridge 5 on the tube body 1; therefore, the straw tube can be easily and efficiently produced.

### (Embodiment 2)

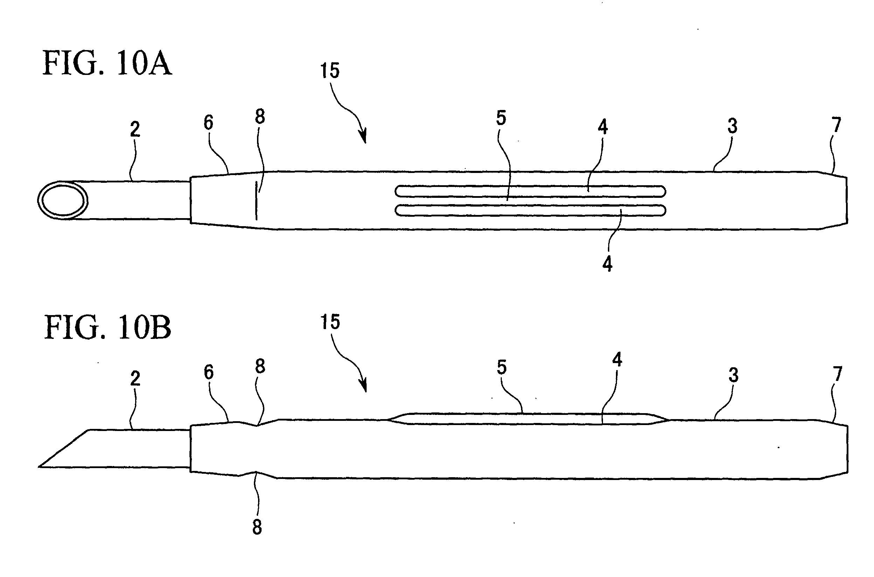

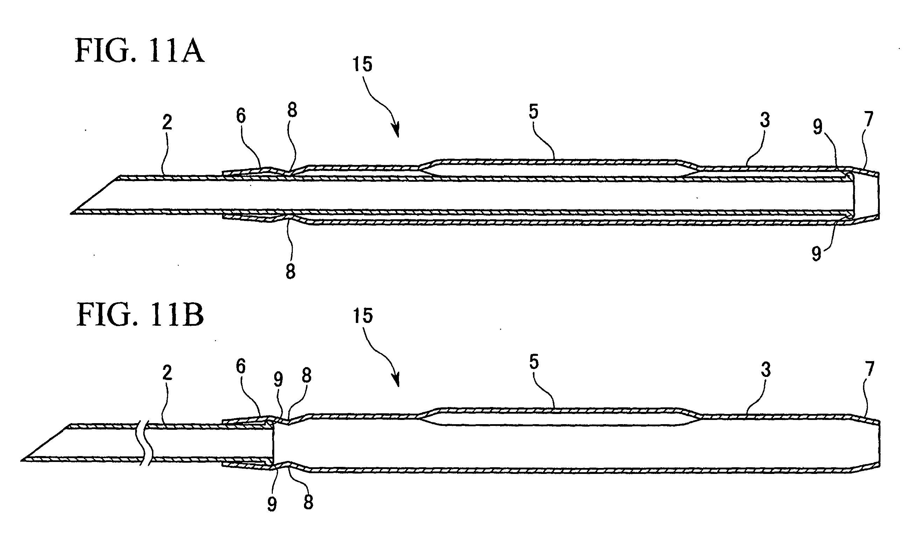

Figs. 10 and 11 are views showing another embodiment of the straw tube of the present invention.

This two-stage straw tube 15 comprises an inner tube 2 and an outermost tube 3 having different diameters and combined to allow free extension or retraction; on the outer circumferential wall of the outermost tube 3, two grooves 4, 4 are formed in the longitudinal direction thereof, and a ridge 5 interposed between these grooves 4, 4 and projecting outward from the datum level of the outer circumferential wall is formed.

At both ends of the outermost tube 3, a restriction part 6 and a restriction part 7 are formed, and on the outer tube toward the tip side, restriction parts 8,8 are formed. At the base end portion of the inner tube 2, a stopper part 9 is formed for preventing the inner tube 2 from slipping out from the restriction part 6 and the restriction part 7 and for preventing the two-stage straw tube 15, which has once been extended, from retracting again by catching onto the restriction parts 8, 8.

The lengths of the groove 4 and the ridge 5 are not particularly limited and may be adjusted such that when the two-stage straw tube 15 is inserted into the drinking container, the ridge 5 comes into contact with the sucking hole of the drinking container. However, in view of practical use and a production standpoint, each length is preferably from 1/3 to 3/4 the length of the outermost tube 3. If the lengths of the groove 4 and the ridge 5 are less than 1/3 the length of the outermost tube 3, there is a risk that the ridge 5 may not come into contact with the sucking hole of the drinking container depending on the length when the two-stage straw tube 15 is inserted into the drinking container, and if the lengths of the groove 4 and the ridge 5 exceed 3/4 the length of the outermost tube 3, there is a possibility that the engagement at the joint part between the inner tube 2 and the outermost tube 3 of the two-stage straw tube 15 will be insufficient.

The height of the ridge 5 is not particularly limited, and it may be sufficient if it is high enough such that, when the two-stage straw tube 15 is inserted into the drinking container, the ridge 5 can expand the sucking hole of the drinking container. However, in view of practical use and a production standpoint, it is preferably from 0.05 to 1.0 mm from the datum level of the outer circumferential wall of the outermost tube 3. If the height of the ridge 5 is less than 0.05 mm from the datum level of the outer circumferential wall of the outermost tube 3, there is a risk that the effect of expanding the sucking hole of the drinking container may not be sufficient, and if the height of the ridge 5 exceeds 1.0 mm from the datum level of the outer circumferential wall of the outermost tube 3, the formation of the ridge 5 becomes difficult.

The "datum level of the outer circumferential wall" as used herein means the surface of the outer circumferential wall of the outermost tube 3 when the groove 4 and the ridge 5 have not been formed.

The depth of the groove 4 is not particularly limited, and it may be sufficient if it is deep enough such that when the two-stage straw tube 15 is inserted into the drinking container, the groove 4 does not conform to the sucking hole of the drinking container. However, in view of practical use and a production standpoint, it is preferably from 0.1 to 0.8 mm from the datum level of the outer circumferential wall of the outermost tube 3. If the depth of the groove 4 is less than 0.1 mm from the datum level of the outer circumferential wall of the outermost tube 3, there is a risk that the groove 4 will conform to the sucking hole of the drinking container and the void formed between the sucking hole and the groove 4 may be blocked. If the depth of the groove 4 exceeds 0.8 mm from the datum level of the outer circumferential wall of the outermost tube 3, the formation of the groove 4 becomes difficult.

The material of the two-stage straw tube 15 may be the same as the material of the straw tube used in Embodiment 1.

When such a two-stage straw tube 15 is inserted into the sucking hole of the drinking container body in the same way as the straw tube of Embodiment 1, the ridge 5 can expand the peripheral edge of the sucking hole to form voids between the grooves 4, 4 and the peripheral edge of the sucking hole. The state in which the ridge 5 expands the peripheral edge of the sucking hole is always maintained, and therefore, the peripheral edge of the sucking hole does not conform to the grooves 4,4 to block the voids. As a result, a state of reduced pressure inside the container body can be prevented, and the generation of deformations of the container body and disagreeable noises can be inhibited. This two-stage straw tube can be attached to the container body in a retracted state.

The straw tube of the present invention is not limited to the two-stage straw tube as shown in the figures, and it is also acceptable if it is a multistage straw tube of three or more stages.

Furthermore, the straw tube of the present invention is not limited to one wherein the groove 4 and the ridge 5 are formed on the outermost tube 3 of the two-stage straw tube as shown in the figures, and the groove 4 and the ridge 5 may be formed on the inner tube 2.

Next, an apparatus for producing a multistage straw tube and a method for producing a multistage straw tube using the apparatus are described below.

Examples of the apparatus for producing a two-stage straw tube 15 include a production apparatus roughly constituted by having a tube forming device for forming an annular inner tube 2 and an outermost tube 3 each having a predetermined length, an outermost tube processing device for forming a groove 4 and a ridge 5 on the outermost tube 3, and an assembling device for combining the inner tube 2 and the outermost tube 3 to complete the two-stage straw tube 15.

The outermost tube processing device used here can be the tube processing device 20 used in the apparatus for producing a straw tube of Embodiment 1.

The production of a two-stage straw tube 15 using this apparatus for producing a two-stage straw tube is carried out as follows.

First, in the tube forming device, an inner tube 2 and an outermost tube 3 each having a predetermined length are formed in advance.

On the outer circumferential wall of the outermost tube 3 formed in the tube forming device, as shown in Fig. 10, two grooves 4,4 are formed along the longitudinal direction thereof, and a ridge 5 interposed between these grooves 4,4 and projecting outward from the datum level of the outer circumferential wall is formed by the tube processing device 20 used in the apparatus for producing a straw tube of Embodiment 1.

The outermost tube 3 having grooves 4,4 and a ridge 5 formed on the outer circumferential wall thereof is transported to the next assembling device by the belt conveyer 29, and here, the inner tube 2 fed from the tube forming device and the outermost tube 3 having the grooves 4,4 and the ridge 5 formed thereon at the tube processing device 20 are assembled to complete a two-stage straw tube 15.

In such a tube processing device 20 and method for producing a two-stage straw tube using the device, the female rod 26 is inserted into the outermost tube 3 as the rotating roller 25 rotates, and then the grooves 35, 35 of the female rod 26 engage with the ridges 37, 37 of the male roller 28 to form grooves 4,4 and a ridge 5 on the outermost tube 3; therefore, a two-stage straw tube 15 can be easily and efficiently produced.

### Example

An example is described below.

A tube comprising a propylene-ethylene block copolymer having a melt flow index of 11 g/10 min. and an ethylene content of 12% by mass was processed using the tube processing device 20 shown in Fig. 4 at a heating temperature of 80°C in the heating of the outermost tube 3 by the heating roller 27 and at a processing rate of 800 tubes/min. to obtain outermost tubes 3 such as shown in Fig. 10 where the outside diameter was 5.8 mm, the thickness was 0.26 mm, the height of the ridge 5 was 0.5 mm, the depth of the groove 4 was 0.6 mm, and the lengths of the ridge 5 and the groove 4 were 36 mm. A whitening phenomenon was not observed in the ridge 5 and groove 4 parts of this outermost tube 3.

Subsequently, this outermost tube 3 and an inner tube 2 were combined to produce a two-stage straw tube 15. This two-stage straw tube 15 was actually inserted into a drinking container, and upon sucking the drink, a reduction in the pressure did not occur within the drinking container.

### Industrial Applicability

The straw tube of the present invention can prevent a reduction in the pressure inside a drinking container during sucking of a drink in the drinking container. By this means, the drink in the drinking container can be easily sucked, and the generation of disagreeable noises can be inhibited.

If the straw tube of the present invention is a multistage straw tube in which two or more tubes having different diameters are combined to allow free extension or retraction, a reduction in the pressure inside the drinking container can be prevented during sucking of the drink in the drinking container, and the straw tube can be attached to the container body in a retracted state.

According to the apparatus and method for producing a straw tube of the present invention, a straw tube capable of preventing a reduction in the pressure inside a drinking container during sucking of a drink in the drinking container can be easily and efficiently produced.

## Claims

1. A straw tube **characterized in that** a groove is formed on the outer circumferential wall of the tube along the longitudinal direction thereof and a ridge projecting outward from the datum level of the outer circumferential wall is formed adjacent to the groove.

2. The straw tube according to claim 1, **characterized in that** a plurality of grooves are formed on the outer circumferential wall of the tube along the longitudinal direction thereof and a ridge interposed between these grooves and projecting outward from the datum level of the outer circumferential wall is formed.

3. The straw tube according to claim 1, **characterized in** being a multistage straw tube in which two or more tubes having different diameters are combined to allow free extension or retraction.

4. The straw tube according to claim 3, **characterized in that** a plurality of grooves are formed on the outer circumferential wall of the tube along the longitudinal direction thereof and a ridge interposed between these grooves and projecting outward from the datum level of said outer circumferential wall is formed.

5. The straw tube according to claim 3, **characterized in that** a groove and a ridge are formed on the outer circumferential wall of at least one tube of said two or more tubes.

6. The straw tube according to claim 3, **characterized in that** a groove and a ridge are formed on the outer circumferential wall of the outermost tube located at the outermost side of said two or more tubes.

7. The straw tube according to any one of claims 1 through 6, **characterized in that** there are two grooves and one ridge which is formed therebetween adjacent to these grooves.

8. The straw tube according to any one of claims 1 through 6, **characterized in that** the lengths of said groove and ridge are 1/3 to 3/4 the length of the tube on which the groove and the ridge are formed.

9. The straw tube according to any one of claims 1 through 6, **characterized in that** the height of said ridge is 0.05 to 1.0 mm from the datum level of the outer circumferential wall of the tube on which the ridge is formed.

10. The straw tube according to any one of claims 1 through 6, **characterized in that** the depth of said groove is 0.1 to 0.8 mm from the datum level of the outer circumferential wall of the tube on which the groove is formed.

11. The straw tube according to any one of claims 1 through 6, **characterized in** comprising a propylene-α-olefin random copolymer having a melt flow index of 3 to 16 g/10 min.

12. The straw tube according to claim 11, **characterized in that** said propylene-α-olefin random copolymer is a propylene-ethylene random copolymer.

13. The straw tube according to claim 12, **characterized in that** the ethylene content of said propylene-ethylene random copolymer is from 2 to 20% by mass.

14. The straw tube according to any one of claims 1 through 6, **characterized in** comprising a propylene-α-olefin block copolymer having a melt flow index of 3 to 16 g/10 min.

15. The straw tube according to claim 14, **characterized in that** said propylene-α-olefin block copolymer is a propylene-ethylene block copolymer.

16. The straw tube according to claim 15, **characterized in that** the ethylene content of said propylene-ethylene block copolymer is from 2 to 20% by mass.

17. The straw tube according to any one of claims 1 through 6, **characterized in** comprising a homopolypropylene having a melt flow index of 3 to 16 g/10 min.

18. An apparatus for producing a straw tube, which is used for producing a straw tube in which a plurality of grooves are formed on the outer circumferential wall of the tube along the longitudinal direction thereof and a ridge interposed between said grooves and projecting outward from the datum level of the outer circumferential wall is formed, said apparatus comprising:
a rotating drum in which a plurality of tube loading grooves onto which tubes are loaded are formed on the outer circumferential wall along the axial direction, a female rod capable of being inserted into or drawn out from a tube within the tube loading groove by the reciprocation of a cam mechanism and having a plurality of grooves formed at the position corresponding to the surface of a tube exposed from the tube loading groove, and a male roller in which a male mold having ridges corresponding to the grooves of said female rod is provided at a plurality of positions on the outer circumferential wall,
wherein said male roller is disposed such that the grooves of said female rod engage with the ridges of the male roller while sandwiching a tube, and wherein said female rod and the male roller are synchronized.

19. The apparatus for producing a straw tube according to claim 18, **characterized in that** said female rod has two grooves and the male mold provided on said male roller has two ridges.

20. A method for producing a straw tube in which a plurality of grooves are formed on the outer circumferential wall of the tube along the longitudinal direction thereof and a ridge interposed between these grooves and projecting outward from the datum level of the outer circumferential wall is formed, said method comprising:
a step of loading a tube onto a tube loading groove formed on the outer circumferential wall of a rotating drum along the axial direction thereof,
a step of inserting into said tube a female rod in which a plurality of grooves are formed at the position corresponding to the surface of the tube exposed from said tube loading grooves, and
a step of engaging the grooves of the female rod within the tube and the ridges of a male mold provided on a male roller while sandwiching the tube.

21. The method for producing a straw tube according to claim 20, **characterized in that** said female rod has two grooves and-the male mold provided on said male roller has two ridges.
